# EUROPÄISCHE PATENTANMELDUNG

(11) **EP 0 718 487 A2**
(43) Veröffentlichungstag der Anmeldung: **26.06.1996**
(21) Anmeldenummer: 95118937.2
(22) Anmeldetag: 01.12.1995
(51) Int. Cl.: F02M 37/00

(54) **Brennstoffversorgungsanordnung in einem Kraftfahrzeug**

(30) Priorität: 24.12.1994 DE 9420678 U
(71) Anmelder: Firma J. Eberspächer, D-73730 Esslingen (DE)
(72) Erfinder: Hintennach, Markus, D-73666 Baltmannsweiler (DE); Hintennach, Hans, D-73666 Baltmannsweiler (DE)

(57) **Zusammenfassung**

Die vorliegende Erfindung bezieht sich auf eine Brennstoffversorgungsanordnung (1) in einem Kraftfahrzeug mit Verbrennungsmotor (2) und Brennstofftank (3) sowie Vorlauf (4) und Rücklauf (5) zwischen Verbrennungsmotor (2) und Brennstofftank (3). Zur Schaffung einer derartigen Brennstoffversorgungsanordnung, welche sehr einfach aufgebaut ist und eine Brennstoffversorgung für einen zusätzlichen Brennstoffverbraucher des Kraftfahrzeugs mit Hilfe einfacher Mittel schafft, weist die Brennstoffversorgungsanordnung erfindungsgemäß einen Rücklaufspeicher (6) oder einen Vorlaufspeicher auf.

## Beschreibung

Die Erfindung betrifft eine Brennstoffversorgungsanordnung in einem Kraftfahrzeug mit Verbrennungsmotor und Brennstofftank sowie Vorlauf und Rücklauf zwischen Verbrennungsmotor und Brennstofftank.

Bei Kraftfahrzeugen finden zunehmend Standheizungen Verwendung, welche für einen erhöhten Komfort und eine erhöhte Verkehrssicherheit sorgen. Vielfach werden derartige Standheizungen in Kraftfahrzeugen nachgerüstet.

Um Standheizgeräte mit Brennstoff (vorrangig mit Otto-Kraftstoff) zu versorgen, gibt es derzeit zwei Möglichkeiten der Nachrüstung:
1. durch einen direkten Anschluß am Fahrzeugtank (zum Beispiel über die Tankgeberarmatur), oder
2. durch Anzapfen der Rücklaufleitung vom Motor zum Tank.

Nachteilig ist, daß im erstgenannten Falle die Tankgeberarmatur vielfach nur schwer oder überhaupt nicht zugänglich und darüber hinaus so gestaltet ist, daß die dichte Einbringung eines separaten Steigrohres nicht möglich ist. Im zweitgenannten Falle ist in vielen Fällen die Mündung durch ein Rückschlagventil dann verschlossen, wenn der Motor abgeschaltet ist, wodurch ein Standheizgerät nicht nachgerüstet werden kann.

Aufgabe der Erfindung ist die Schaffung einer Brennstoffversorgungsanordnung der eingangs genannten Art, welche sehr einfach aufgebaut ist und eine Brennstoffversorgung für einen zusätzlichen Brennstoffverbraucher des Kraftfahrzeugs mit Hilfe einfacher Mittel schafft.

Gelöst wird die der Erfindung zugrundeliegende Aufgabe durch die im Anspruch 1 angegebenen Merkmale.

Vorteilhaft weitergebildet wird der Erfindungsgegenstand durch die Merkmale der Unteransprüche 2 bis 8.

Entsprechend den Merkmalen der Unteransprüche 2 bis 8 kann auch ein Vorlaufspeicher nach Anspruch 1 weitergebildet sein.

Wesen der Erfindung ist die Ausbildung insbesondere eines Rücklaufspeichers, welcher in den Rücklauf der Brennstoffleitung vom Verbrennungsmotor zum eigentlichen Brennstofftank des Kraftfahrzeugs angeordnet und insbesondere bei Kraftfahrzeugen nachgerüstet werden kann. Der Rücklaufspeicher wird bei Betrieb des Kraftfahrzeuges laufend mit Brennstoff versorgt, und es sorgt eine an der Oberseite des Rücklaufspeichers vorgesehene Rücklauf-Ableitung in Richtung Brennstofftank kontinuierlich für eine vollständige Befüllung des Rücklaufspeichers. Ist das Kraftfahrzeug bzw. der Verbrennungsmotor außer Betrieb (und ein in der Rücklaufleitung sich befindliches Rückschlagventil vorhanden), steht gleichwohl Brennstoff für einen zusätzlichen Brennstoffverbraucher des Kraftfahrzeugs durch den erfindungsgemäßen Rücklaufspeicher zur Verfügung.

Der zusätzliche Brennstoffverbraucher ist bevorzugt das Heizgerät einer Kraftfahrzeug-Standheizung.

Wenn im Standheizbetrieb beide Anschlüsse der Rücklaufleitung im Rücklaufspeicher verschlossen sind, bildet sich bei Brennstoffentnahme ein Unterdruck im Rücklaufspeicher. Um diesen Unterdruck abzubauen, muß ab ca. -30 mbar der Rücklaufspeicher mittels einer Speicherbelüftung belüftet werden.

Die Speicherbelüftung umfaßt insbesondere ein am Rücklaufspeicher angeordnetes Rückschlagventil, welches bei Brennstoffentnahme die Speicherbelüftungsleitung in Richtung Atmosphäre gegen eine Federkraft öffnet. Bei Systemen ohne tankseitigen Verschluß im Rücklauf ist das Rückschlagventil nicht erforderlich. Die Speicherbelüftung erfolgt dann vom Tank her.

Eine Weiterbildung der Erfindung sieht vor, daß der Rücklaufspeicher an eine Dosierpumpe angeschlossen ist, welche eine Brennstoffleitung zum zusätzlichen Brennstoffverbraucher des Kraftfahrzeuges aufweist, wobei zwischen Dosierpumpe und Rücklaufspeicher im Bedarfsfall in Druckminderer angeordnet ist.

Ein praktisches Ausführungsbeispiel eines Rücklaufspeichers umfaßt einen Behälter, welcher bevorzugt ein Aluminiumgehäuse oder ein Gehäuse aus glasfaserverstärktem Kunststoff aufweisen kann.

Das Speichervolumen beträgt in einer praktischen Ausführungsvariante ca. 500 cm³, und der Leistungsbetrieb eines zusätzlichen Brennstoffverbrauchers in Form eines Heizgerätes einer Kfz-Standheizung ist für ca. 5 kW ausgelegt. Ein derartiger Zwischentank speichert also ständig ca. 0,5 l Brennstoff. Dieser Brennstoff reicht bei 5kW-Geräten im Standheizbetrieb für ca. 60 Min. Ist der Rücklaufspeicher während eines Standheizbetriebes ganz oder teilweise entleert, wird dieser selbsttätig wieder vollständig gefüllt, sowie das Kraftfahrzeug in Betrieb genommen, d.h. der Verbrennungsmotor gestartet wird.

Der Rücklaufspeicher wird zweckmäßigerweise an einer crash-ungefährdeten Stelle im Motorraum eines Kraftfahrzeugs befestigt. Eine stabile Tankausführung und Halterung bei minimalem Eigengewicht sorgen für eine erhöhte Sicherheit. Ausreichende Querschnittsdimensionen der Anschlüsse für Aus- und Eingang sorgen dafür, daß der Gegendruck im Rücklaufsystem nur gering erhöht wird und der Brennstoff nicht aufschäumt.

Von Vorteil ist die einfache und kurze Montagezeit eines erfindungsgemäßen Rücklaufspeichers in einem Kraftfahrzeug, insbesondere bei einer Nachrüstung. Durch den einfachen Aufbau entstehen nur geringe Fertigungskosten. Es ergeben sich nur kurze Wege der Zuleitung vom Tank zur Zusatzheizung. Selbstverständlich ist die Funktion einer Zusatzheizung auch bei laufendem Motor gesichert.

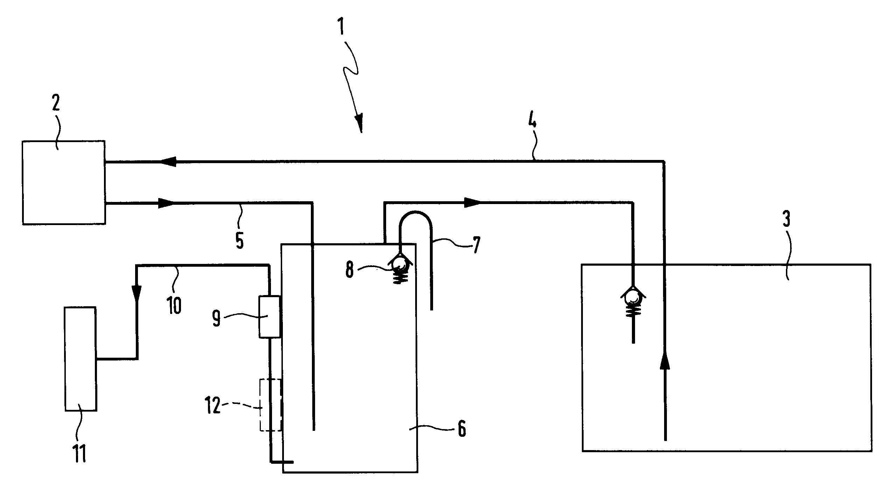

Die Erfindung wird nachfolgend anhand eines Ausführungsbeispiels unter Bezugnahme auf die beigefügte Zeichnung näher erläutert, deren einzige Figur ein Funktionsschema einer Brennstoffversorgungsanordnung zeigt.

Gemäß Zeichnung ist zwischen dem Einspritzsystem eines Verbrennungsmotors 2 eines Kraftfahrzeuges und dem kraftfahrzeugeigenen Brennstofftank 3 ein an sich bekannter Brennstoff-Vorlauf 4 und ein grundsätzlich bekannter Brennstoff-Rücklauf 5 vorgesehen, welcher allerdings durch die Erfindung geringfügig abgeändert ist.

Insbesondere umfaßt die Brennstoffversorgungsanordnung einen Rücklaufspeicher 6 im Rücklauf 5, welcher zu diesem Zweck unterbrochen ist.

Der Rücklaufspeicher 6 ist aus glasfaserverstärktem Kunststoff hergestellt und auf Dichtheit geprüft. Er besitzt ein Volumen für ca. 0,5 l Brennstoff und sorgt für einen Heizbetrieb einer gängigen 5kW-Kraftfahrzeug-Standheizung für ca. 60 Minuten.

Der Rücklaufspeicher ist an einer geeigneten, nicht crash-gefährdeten Stelle im Motorraum eines Kraftfahrzeugs befestigt. Der Abstand zum Abgassammler des Verbrennungsmotors beträgt mindestens 100 mm. Bei Bedarf kann ein Strahlschutzblech im Abstand von ca. 10 mm montiert sein.

Der Rücklaufspeicher 6 besitzt eine Speicherbelüftung 7 in Richtung Atmosphäre mit einem im Innern des Rücklaufspeichers integriertem Rückschlag- oder Belüftungsventil 8, welches bei einem Entleeren im Standheizbetrieb des Rücklaufspeichers 6 öffnet.

Der Rücklaufspeicher 6 umfaßt bodenseitig einen Saugstutzen in Richtung einer Dosierpumpe 9, wobei in den Saugstutzen ein Druckminderer 12 angeordnet ist, der einen möglichen Überdruck des Rücklaufspeichers 6 auf den zulässigen Pumpenvordruck der Dosierpumpe 9 reduziert.

Zwischen Dosierpumpe 9 und einem Brennstoffverbraucher 11 in Form eines Heizgerätes einer Kraftfahrzeug-Standheizung befindet sich eine Brennstoffleitung 10 zur Versorgung des Heizgerätes mit Brennstoff.

Im Betrieb eines laufenden Verbrennungsmotors 2 strömt fortwährend Brennstoff im Rücklauf 5 in Richtung Brennstofftank 3. Die Anschlüsse des Rücklaufs 5 im Rücklaufspeicher 6 sind so verlegt, daß der Rücklaufspeicher 6 vollständig gefüllt ist. Befindet sich weniger Brennstoff im Rücklaufspeicher 6, wird durch den laufenden Verbrennungsmotor der Rücklaufspeicher 6 vollständig gefüllt.

Mithin steht Brennstoff aus dem Rücklaufspeicher 6 für einen zusätzlichen Brennstoffverbraucher eines Kraftfahrzeuges auch dann zur Verfügung, wenn der Fahrzeugmotor nicht betrieben ist. Ein derartiger Rücklaufspeicher nebst Zusatzheizung kann auf einfache Weise nachgerüstet werden.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Brennstoffversorgungsanordnung (1) in einem Kraftfahrzeug mit Verbrennungsmotor (2) und Brennstofftank (3) sowie Vorlauf (4) und Rücklauf (5) zwischen Verbrennungsmotor (2) und Brennstofftank (3),
gekennzeichnet durch
einen Rücklaufspeicher (6) oder einen Vorlaufspeicher.

2. Brennstoffversorgungsanordnung nach Anspruch 1,
dadurch gekennzeichnet,
daß der Rücklaufspeicher (6) eine Speicherbelüftung (7) aufweist.

3. Brennstoffversorgungsanordnung nach Anspruch 1 oder 2,
dadurch gekennzeichnet,
daß der Rücklaufspeicher (6) an eine Dosierpumpe (9) angeschlossen ist, welche eine Brennstoffleitung (10) zu einem Brennstoffverbraucher (11) des Kraftfahrzeugs aufweist.

4. Brennstoffversorgungsanordnung nach Anspruch 3,
dadurch gekennzeichnet,
daß der Brennstoffverbraucher (11) ein Heizgerät einer Kraftfahrzeug-Standheizung ist.

5. Brennstoffversorgungsanordnung nach Anspruch 3 oder 4,
dadurch gekennzeichnet,
daß zwischen Rücklaufspeicher (6) und Dosierpumpe (9) ein Druckminderer (12) angeordnet ist.

6. Brennstoffversorgungsanordnung nach einem der Ansprüche 1 bis 5,
dadurch gekennzeichnet,
daß der Rücklaufspeicher (6) einen Behälter aus Aluminium und/oder aus glasfaserverstärktem Kunststoff umfaßt.

7. Brennstoffversorgungsanordnung nach einem der Ansprüche 1 bis 6,
dadurch gekennzeichnet,
daß der Rücklaufspeicher (6) ein Speichervolumen von ca. 0,5 l aufweist.

8. Brennstoffversorgungsanordnung nach einem der Ansprüche 4 bis 8,
dadurch gekennzeichnet,
daß das Heizgerät für eine Betriebsleistung von ca. 5 kW ausgelegt bzw. ausgebildet ist.
